# EUROPÄISCHE PATENTSCHRIFT

(11) **EP 3 483 005 B1**
(45) Veröffentlichungstag und Bekanntmachung des Hinweises auf die Patenterteilung: **18.08.2021**
(21) Anmeldenummer: 18205368.6
(22) Anmeldetag: 09.11.2018
(51) Int. Cl.: B60Q 1/14, H05B 45/12

(54) **VERFAHREN UND LICHTSYSTEM ZUM SCHUTZ VOR BLENDLICHT SOWIE ARBEITSMASCHINE MIT DEM LICHTSYSTEM**
METHOD AND LIGHT SYSTEM FOR PROTECTION AGAINST GLARE AND WORKING MACHINE WITH THE LIGHT SYSTEM
PROCÉDÉ ET SYSTÈME D'ÉCLAIRAGE DESTINÉS À LA PROTECTION CONTRE LA LUMIÈRE ÉBLOUISSANTE AINSI QUE MACHINE DE TRAVAIL POURVUE D'UN TEL SYSTÈME D'ÉCLAIRAGE

(30) Priorität: 10.11.2017 DE 102017220013
(43) Veröffentlichungstag der Anmeldung: 15.05.2019
(73) Patentinhaber: HELLA GmbH & Co. KGaA, 59552 Lippstadt (DE)
(72) Erfinder: HINGEL, Andreas, 2431 Enzersdorf an der Fischa (AT); AICHINGER-ROSENBERGER, Michael, 3620 Spitz / Donau (AT); JANDRISITS, Christoph, 7534 Olbendorf (AT); DERKITS, Christian, 7535 St. Michael im Burgenland (AT); POSNICEK, Thomas, 3485 Haitzendorf (AT); KELLNER, Karlheinz, 3500 Krems (AT); GARBER, Michael, 1160 Wien (AT); KRAMER, Daniel, 26639 Wiesmoor (DE)
(74) Vertreter: Patentanwälte Bals & Vogel

(56) Entgegenhaltungen:
- WO-A1-2017/207185
- DE-A1-102007 026 750
- DE-A1-102013 104 274
- DE-A1-102013 104 276
- US-A1- 2015 048 738

## Beschreibung

Die vorliegende Erfindung betrifft ein Verfahren zum Schützen eines Nutzers eines Lichtsystems vor Blendlicht von wenigstens einem Leuchtmittel des Lichtsystems. Die Erfindung betrifft ferner ein Lichtsystem zum Durchführen eines solchen Verfahrens sowie eine Arbeitsmaschine mit dem Lichtsystem.

Im Stand der Technik sind verschiedene Selbstblendschutzsysteme bekannt. Aus der US 2014125234 A1 geht beispielsweise ein Dimmer mit Bewegungs- und Lichtsensor für einen Blendschutz für Wohnraumanwendungen hervor. Andere Systeme sind aus DE 10 2013 104274 A1 und US2015048738 A1 bekannt. Bei Selbstblendschutzsystemen für Arbeitsmaschinen kann dabei grundsätzlich zwischen internen und externen Schutzsystemen zum Selbstblendschutz unterschieden werden.

Interne Selbstblendschutzsysteme verfügen über einen Lichtsensor bzw. einen Lichtreferenzsensor, der in oder auf einem Scheinwerfergehäuse montiert ist. Dabei können ein oder mehrere Scheinwerfer eines Fahrzeugs über einen integrierten Lichtsensor verfügen. Ein solcher Lichtsensor reagiert auf reflektiertes Licht. Der Lichtsensor kann aktiv oder passiv wirken. Ein aktiver Lichtsensor erzeugt eine elektrische Größe durch das einfallende Licht. Ein passiver Lichtsensor verändert seine internen elektrischen Eigenschaften in Abhängigkeit von dem einfallenden Licht. Die aktive oder passive Veränderung des Lichtsensors wird analog und/oder digital interpretiert und hat Auswirkungen auf den Strom zum Scheinwerfer. Durch die Erhöhung bzw. Verringerung des Stroms in Abhängigkeit eines Lichtsensorsignals wird die Lichtintensität automatisch an das reflektierte Licht angepasst. Je mehr Licht zurückgeworfen wird, desto geringer wird der Strom und desto geringer wird das ausgesendete Licht, bis der Scheinwerfer ein Niveau erreicht hat, bei dem es zu keiner Blendung mehr kommt. Der als unangenehmen empfundene Schwellwert bzw. Sollwert, ab jenem gedimmt werden soll, ist vom Einsatzzweck abhängig und kann durch Veränderung der Schaltungsparameter angepasst werden.

Bei externen Selbstblendschutzsystemen wird ähnlich wie bei internen Selbstblendschutzsystemen ganzheitlich auf einfallendes Licht reagiert. Ein externes Selbstblendschutzsystem erkennt, ob Licht zu einem Fahrer einer Arbeitsmaschine mit dem Selbstblendschutzsystem zurückgeworfen wird oder nicht. Externe Lichtsensoren können dabei unabhängig vom Scheinwerfer platziert werden. Bei externen Selbstblendschutzsystemen muss zusätzlich für eine erweiterte Datenübertragung zwischen Lichtsensoren und Scheinwerfern gesorgt werden. Dafür kann der Lichtsensor bei externen Selbstblendschutzsystemen näher am Fahrerauge platziert werden. Je näher der Lichtsensor am Fahrerauge positioniert ist, desto effizienter kann Blendung des Fahrers detektiert werden.

Den vorstehend beschriebenen Selbstblendschutzsystemen gemein ist, dass bei reflektiertem Licht bisweilen nicht unterschieden werden konnte, von welcher Lichtquelle das Blendlicht stammt. Somit kann, wenn Blendlicht erkannt wird, nur die Helligkeit des gesamten Scheinwerfersystems gedimmt oder im Notfall ausgeschaltet werden, um eine Blendung des Arbeiters zu verhindern. Dies ist beispielsweise bei der Arbeit mit einer Arbeitsmaschine auf dem Feld unbefriedigend. Alternativ können nach dem Zufallsprinzip oder nach Gefühl einzelne Scheinwerfer gedimmt oder ausgeschaltet werden. Dies dauert jedoch relativ lange und kann den Nutzer des Lichtsystems von der eigentlichen Arbeit ablenken.

Aufgabe der vorliegenden Erfindung ist es, der voranstehend beschriebenen Problematik zumindest teilweise Rechnung zu tragen. Insbesondere ist es Aufgabe der vorliegenden Erfindung, ein Verfahren, ein Lichtsystem sowie eine Arbeitsmaschine mit dem Lichtsystem zum einfachen, schnellen und gezielten Schützen eines Nutzers des Lichtsystems vor Blendlicht aus dem Lichtsystem zu schaffen.

Die voranstehende Aufgabe wird durch die Patentansprüche gelöst. Insbesondere wird die voranstehende Aufgabe durch das Verfahren gemäß Anspruch 1, das Lichtsystem gemäß Anspruch 10 sowie die Arbeitsmaschine gemäß Anspruch 14 gelöst. Weitere Vorteile der Erfindung ergeben sich aus den Unteransprüchen, der Beschreibung und den Zeichnungen. Dabei gelten Merkmale und Details, die im Zusammenhang mit dem Verfahren beschrieben sind, selbstverständlich auch im Zusammenhang mit dem erfindungsgemäßen Lichtsystem sowie der erfindungsgemäßen Arbeitsmaschine und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird ein Verfahren zum Schützen eines Nutzers eines Lichtsystems, das mehrere Leuchtmittel, wenigstens einen Lichtsensor sowie wenigstens eine Codierungseinheit aufweist, vor Blendlicht von wenigstens einem der Leuchtmittel, zur Verfügung gestellt. Das Verfahren weist die folgenden Schritte auf:
- Erstellen einer jeweiligen Codierung für Licht der einzelnen Leuchtmittel durch die wenigstens eine Codierungseinheit,
- Erfassen von Blendlicht von wenigstens einem der Leuchtmittel durch den wenigstens einen Lichtsensor,
- Zuordnen des erfassten Blendlichts zu dem wenigstens einen zugehörigen Leuchtmittel anhand der Codierung des Lichtes für das entsprechende Leuchtmittel, und
- Einstellen des wenigstens einen zugehörigen Leuchtmittels zum Schützen des Nutzers vordem erfassten Blendlicht.

Dadurch, dass jedes Licht von jedem Leuchtmittel eine unterschiedliche Codierung erhält, kann bei erfasstem Blendlicht zuverlässig und schnell erkannt werden, von welchem Leuchtmittel oder von welchen Leuchtmitteln das Blendlicht bzw. die Blendlichter stammen. Anschließend kann entsprechend schnell auf das erkannte Blendlicht reagiert werden, indem die jeweilige Blendlichtquelle wunschgemäß eingestellt wird. Die Blendlichtquelle bzw. das entsprechende Leuchtmittel kann im Rahmen der Einstellung gedimmt, ausgeschaltet und/oder in seiner Position verstellt, also beispielsweise gedreht oder verschoben, werden.

Zum Erstellen der Codierung können eine oder mehrere Codierungseinheiten verwendet werden. Demnach ist es möglich dass jedem Leuchtmittel eine eigene Codierungseinheit zugeordnet ist.

Im Rahmen der Einstellung des wenigstens einen zugehörigen Leuchtmittels kann das erfasste Blendlicht mit einem Sollwert bzw. einer Solllichtstärke verglichen werden. D.h., unter Blendlicht ist Licht zu verstehen, dass eine Lichtstärke über einem vordefinierten Sollwert bzw. Schwellenwert aufweist. Wenn festgestellt wird, dass das Blendlicht bzw. das erfasste Licht über dem Sollwert liegt, kann das Leuchtmittel bzw. das Licht des Leuchtmittels entsprechend verstellt, also gedimmt, ausgeschaltet und/oder bezüglich seiner Position verändert werden.

Die Leuchtmittel sind vorzugsweise in Form einer Leuchtmittelmatrix in wenigstens einem Leuchtmodul zum Erzeugen des Arbeitslichtes angeordnet. Durch eine Matrixbeleuchtung ist eine besonders feine Einstellung der Arbeitsbeleuchtung hinsichtlich einer gewünschten Ausleuchtung sowie der Dimmung möglich. Ein Matrix-Arbeitslicht ermöglicht die explizite Beleuchtung von definierten Bereichen und kann dadurch auch effizient zum Blendschutz verwendet werden, indem einzelne Leuchtmittel bzw. Leuchtpixel wie gewünscht eingestellt werden.

Das Leuchtmittel als kleinste Leuchteinheit des Lichtsystems kann mithin als Leuchtpixel der Leuchtmittelmatrix verstanden werden. Die Leuchtmittelmatrix kann mehrere Lichtreihen und mehreren Lichtspalten aufweisen, wobei in jeder Lichtreihe und in jeder Lichtspalte jeweils mehrere Leuchtmittel angeordnet sind. Das Lichtsystem und entsprechend auch die Leuchtmittelmatrix können also wenigstens vier Leuchtmittel aufweisen, welche in wenigstens zwei Spalten und wenigstens zwei Reihen angeordnet sind.

Das Lichtsystem ist vorzugsweise als mobiles Lichtsystem ausgestaltet. Das Lichtsystem ist für den mobilen Arbeitseinsatz, beispielsweise in und/oder an einer entsprechend mobilen Arbeitsmaschine, konfiguriert.

Bei einem erfindungsgemäßen Lichtsystem kann es von Vorteil sein, wenn den Leuchtmitteln oder der Leuchtmittelmatrix bzw. dem Leuchtmodul ein Umsetzer vorgeschaltet ist, der die Codierung in entsprechende Lichtsignale umsetzen kann. Dem Umsetzer oder den Umsetzern ist bevorzugt eine Kontrolleinheit zum Senden und/oder Erzeugen der Codierung vorgeschaltet. Die Kontrolleinheit kann in Form einer sogenannten Light Control Unit (LCU) ausgestaltet sein. Die LCU kann ferner zur Auswertung der durch den wenigstens einen Lichtsensor erfassten Lichtsignale konfiguriert und ausgestaltet sein. Die Aufgabe der LCU kann alternativ oder zusätzlich von einer anderen Steuereinheit wie einem sogenannten Body Control Modul (BCM), das mit der LCU in Signalverbindung stehen kann, übernommen werden.

Die einzelnen Leuchtmittel des Leuchtmoduls können voneinander abgegrenzt oder leicht überlappend ausgeführt werden. Die Anzahl der Leuchtmittel ist grundsätzlich innerhalb technischer Grenzen frei wählbar. Eine sinnvolle Anzahl von Leuchtmitteln kann abhängig von Einsatzzweck und Montagemöglichkeiten gewählt werden.

Darunter, dass das wenigstens eine zugehörige Leuchtmittel anhand des erfassten Blendlichts eingestellt wird ist zu verstehen, dass das wenigstens eine zugehörige Leuchtmittel unter Verwendung der Codierung des erfassten Blendlichts eingestellt wird. Das erfasste Blendlicht kann von einem oder mehreren Leuchtmitteln stammen. Neben dem erfassten Blendlicht bzw. der Codierung desselben können noch weitere Signale und/oder Informationen genutzt werden, um das wenigstens eine zugehörige Leuchtmittel einzustellen.

Die vorliegende Erfindung betrifft insbesondere ein Lichtsystem in Form einer Arbeitsbeleuchtung für eine Arbeitsmaschine. Eine solche Arbeitsbeleuchtung unterscheidet sich insbesondere von den technischen Gebieten der Straßen oder Wohnraumbeleuchtungen. Eine solche Arbeitsbeleuchtung weist vorzugsweise eine Helligkeit auf, mit welcher beispielsweise keine Straßenzulassung für ein Kraftfahrzeug möglich wäre. Die in Rede stehende Arbeitsbeleuchtung soll insbesondere für mobile Arbeitsmaschinen wie Landmaschinen geeignet sein. Landmaschinen können Traktoren, Mähdrescher, Harvester, oder dergleichen sein.

Bei einer solchen Arbeitsbeleuchtung kann bereits eines der Leuchtmittel und/oder ein Leuchtmodul zum Erzeugen von Arbeitslicht mit wenigstens 2.000 Lumen ausgestaltet sein. D.h., das Leuchtmittel bzw. das Leuchtmodul sind in der Lage, Arbeitslicht mit einem Lichtstrom von wenigstens 2.000 Lumen zu erzeugen. Weiterhin ist es möglich, dass bei einem erfindungsgemäßen Lichtsystem mehrere Leuchtmittel oder Leuchtmodule zum Erzeugen von Arbeitslicht mit jeweils wenigstens 2.000 Lumen angeordnet sind. Das Arbeitslicht des Lichtsystems kann dadurch auf beispielsweise 4.000 Lumen, 6.000 Lumen oder auch über 10.000 Lumen erhöht werden. Ein solcher Lichtstrom kann bei gattungsgemäßen Arbeitsmaschinen insbesondere bei schwierigen Witterungs- und/oder Umgebungsverhältnissen darüber entscheiden, ob die Arbeit zufriedenstellen erledigt werden kann oder nicht.

Gemäß einer weiteren Ausführungsform der vorliegenden Erfindung ist es möglich, dass bei einem Verfahren die Codierung mittels Pulsweitenmodulation durchgeführt wird. Pulsweitenmodulation hat sich bei Versuchen im Rahmen der vorliegenden Erfindung als zuverlässige Methode zum Erstellen der jeweiligen Codierungen herausgestellt.

Zudem ist es möglich, dass bei einem erfindungsgemäßen Verfahren die Codierung einen vordefinierten Tastgrad (Duty Cycle) aufweist. D.h., das codierte Licht weist den vordefinierten Tastgrad auf bzw. wird mit dem vordefinierten Tastgrad eingestellt. Der Tastgrad, durch welchen das Licht als entsprechend gepulstes Licht ausgegeben werden kann, hat sich ebenfalls als einfaches und zuverlässiges Codierungsmittel herausgestellt. Bei umfangreichen Versuchen, die im Rahmen der vorliegenden Erfindung durchgeführt wurden, hat sich ferner herausgestellt, dass ein Tastgrad zwischen 95% und 99%, insbesondere zwischen 97% und 98%, vorteilhaft ist. Insbesondere ein Tastgrad von 97,5 % hat sich als besonders vorteilhaft herausgestellt. Mit einem solchen Tastgrad können sowohl eine ausreichende Helligkeit erreicht als auch eine zuverlässige und unterscheidungskräftige Codierung erzielt werden.

Von weiterem Vorteil kann es sein, wenn bei einem erfindungsgemäßen Verfahren die Codierung eine vordefinierte Frequenz aufweist. D.h., jedes Leuchtmittel wird mit einer anderen Frequenz bzw. Trägerfrequenz angesteuert. Auch dadurch lässt sich eine aussagekräftige Codierung des Lichts bewerkstelligen. Die jeweiligen Codierungen weisen vorzugsweise unterschiedliche Frequenzen auf, wobei sich die Frequenzen um wenigstens 5 Hz, insbesondere in einem Bereich von 20 Hz bis 30 Hz, bevorzugt um ca. 30 Hz, voneinander unterscheiden. D.h., die unterschiedlichen Leuchtmittel weisen Lichter mit einem entsprechenden Frequenzbandabstand auf. Tastgrad und Frequenzbandabstand der Pulsweitenmodulation sind hierbei vorzugsweise entsprechend einer Abtastrate des Lichtsensors eingestellt. Als Lichtsensor wird bevorzugt eine Fotodiode verwendet und als Leuchtmittel wenigstens eine LED.

Darüber hinaus ist es bei einem Verfahren gemäß der vorliegenden Erfindung möglich, dass die Frequenz der Codierung eine Rate zwischen 100 Hz und 10.000 Hz, insbesondere zwischen 1.000 Hz und 3.000 Hz aufweist. Insbesondere bei einer Rate ab 1.000 Hz können negative Auswirkungen auf einen Nutzer des Lichtsystems verhindert werden, die sich bei einer niedrigeren Frequenz herausgestellt haben. Die Codierung kann außerdem eine vordefinierte Bit-Codierung aufweisen. Auch hierdurch lassen sich aussagekräftige Rückschlüsse über die Herkunft des erfassten Lichtes bzw. Blendlichts ziehen.

Bei einer weiteren Modifikationsvariante der vorliegenden Erfindung ist es möglich, dass bei einem Verfahren das wenigstens eine zugehörige Leuchtmittel unter Verwendung eines Eye-Tracking-Systems zum Erfassen von Blickinformationen eines Nutzers des Lichtsystems sowie unter Berücksichtigung der erfassten Blickinformationen eingestellt wird. Durch die Verwendung des Eye-Tracking-Systems kann das Arbeitslicht gezielt auf die Bedürfnisse des Nutzers des Lichtsystems eingestellt werden.

Gemäß einem weiteren Aspekt der vorliegenden Erfindung wird ein Lichtsystem zur Verfügung gestellt. Das Lichtsystem weist mehrere Leuchtmittel, wenigstens einen Lichtsensor zum Erfassen der Lichter der Leuchtmittel, wenigstens eine Codierungseinheit zum unterschiedlichen Codieren der Lichter der Leuchtmittel, und eine Kontrolleinheit zum Steuern der Codierungseinheit, auf. Die Kontrolleinheit steht mit dem wenigstens einen Lichtsensor sowie der wenigstens einen Codierungseinheit in Signalverbindung und ist zum Durchführen eines wie vorstehend im Detail beschriebenen Verfahrens ausgestaltet. Damit bringt ein erfindungsgemäßes Lichtsystem die gleichen Vorteile mit sich, wie sie ausführlich mit Bezug auf das erfindungsgemäße Verfahren beschrieben worden sind. Die Codierungseinheit kann in Form einer Kontrolleinheit, beispielsweise in Form der LCU, ausgestaltet sein. Die LCU kann ferner zur Auswertung der durch den wenigstens einen Lichtsensor erfassten Lichtsignale konfiguriert und ausgestaltet sein. Die Aufgabe der LCU kann alternativ oder zusätzlich von einer anderen Steuereinheit wie dem BCM, das mit der LCU in Signalverbindung stehen kann, übernommen werden.

Bei einer Ausgestaltungsvariante der vorliegenden Erfindung ist es möglich, dass die Leuchtmittel jeweils eine LED aufweisen oder jeweils als LED ausgestaltet sind. LED haben sich als ausreichend helle und energiesparende Leuchtmittel bewährt.

Weiterhin hat es sich als vorteilhaft herausgestellt, wenn bei einem Lichtsystem der wenigstens eine Lichtsensor an oder in unmittelbarer Nähe von wenigstens einem der Leuchtmittel angeordnet ist. Das Leuchtmittel kann mithin einen integrierten Lichtsensor bzw. Lichtreferenzsensor aufweisen. Insbesondere können mehrere Leuchtmittel des Lichtsystems jeweils mit einem Lichtsensor ausgestattet sein bzw. an mehreren Leuchtmitteln kann jeweils wenigstens ein Lichtsensor angeordnet sein. Durch die Positionierung des Lichtsensors an oder in wenigstens einem der Leuchtmittel kann das Lichtsystem insbesondere gegenüber Dritten gezielt wunschgemäß eingestellt werden.

Von weiterem Vorteil kann es sein, wenn bei einem erfindungsgemäßen Lichtsystem ein Eye-Tracking-System zum Erfassen von Blickinformationen eines Nutzers des Lichtsystems angeordnet ist, wobei die Kontrolleinheit ausgestaltet ist, das wenigstens eine zugehörige Leuchtmittel abhängig von den erfassten Blickinformationen einzustellen. Das Eye-Tracking-System kann in Form eines Headsets ausgestaltet sein, das der Nutzer wie eine Art Brille aufsetzen kann. Dadurch kann die Augenbewegung des Nutzers besonders genau erfasst werden. Das Eye-Tracking-System kann aber auch dezentral vom Nutzer, beispielsweise in einer Fahrerkabine einer Arbeitsmaschine im Blickfeld des Nutzers, angeordnet sein. Dadurch kann die uneingeschränkte Bewegungs- und Sichtfreiheit für den Nutzer gewährleistet werden.

Gemäß einem weiteren Aspekt der vorliegenden Erfindung wird eine Arbeitsmaschine mit einem wie vorstehend beschriebenen Lichtsystem zur Verfügung gestellt, wobei die Arbeitsmaschine eine Kabine für einen Nutzer des Lichtsystems aufweist. Damit bringt auch eine erfindungsgemäße Arbeitsmaschine die vorstehend beschriebenen Vorteile mit sich. Bei einer erfindungsgemäßen Arbeitsmaschine kann es von Vorteil sein, wenn der wenigstens eine Lichtsensor in der Kabine, insbesondere im Sichtbereich und auf Augenhöhe eines sich in der Kabine befindenden und arbeitenden Nutzers, angeordnet ist. Dadurch kann der Nutzer auf einfache und zuverlässige Weise vor Blendlicht geschützt werden. Vorzugsweise ist der wenigstens eine Lichtsensor derart in der Kabine angeordnet, dass er sich in der Nähe der Augen des Nutzers, beispielsweise durchschnittlich näher als 50 cm an den Augen des Nutzers, befindet. Dabei ist von einer Arbeitsposition, insbesondere einer Sitzposition, des Nutzers auszugehen.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein. Anhand der beigefügten Zeichnung wird die Erfindung nachfolgend näher erläutert. Dabei zeigt:
- Fig. 1: ein Lichtsystem gemäß einer erfindungsgemäßen Ausführungsform, und
- Fig. 2: eine Arbeitsmaschine mit einem erfindungsgemäßen Lichtsystem.

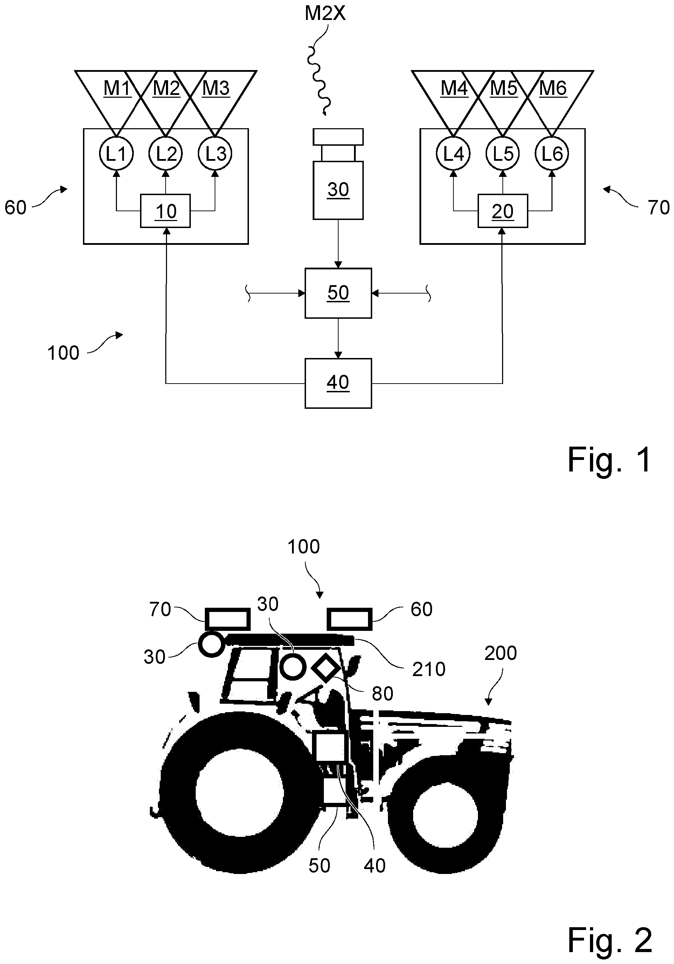

Elemente mit gleicher Funktion und Wirkungsweise sind in den Figuren 1 und 2 jeweils mit denselben Bezugszeichen versehen.

Fig. 1 zeigt ein Lichtsystem 100 mit mehreren Leuchtmitteln L1 - L6 in Form von LEDs. Das Lichtsystem 100 weist einen Lichtsensor 30 zum Erfassen der Lichter M1 - M6 der Leuchtmittel L1 - L6 in Form einer Fotodiode, eine Codierungseinheit 40 zum unterschiedlichen Codieren der Lichter M1 - M6 der Leuchtmittel L1 - L6, und eine Kontrolleinheit 50 in Form einer LCU zum Steuern der Codierungseinheit 40 auf. Die Kontrolleinheit 50 steht mit dem Lichtsensor 30 sowie der Codierungseinheit 40 in Signalverbindung und ist zum Durchführen eines später im Detail beschriebenen Verfahrens konfiguriert und ausgestaltet ist. Die LCU ist vorzugsweise mit einer Leistungsquelle sowie mit einem BUS-System zum Übermitteln der gewünschten Modulationsdaten verbunden.

Das in Fig. 1 dargestellte Lichtsystem weist ein erstes Leuchtmodul 60 und ein zweites Leuchtmodul 70 auf, wobei in den beiden Leuchtmodulen 60, 70 jeweils drei Leuchtmittel angeordnet sind. Im ersten Leuchtmodul 60 ist ein erster Umsetzer 10 zum Umsetzen der Codierung für die Leuchtmittel L1 - L3 angeordnet und im zweiten Leuchtmodul 70 ist ein zweiter Umsetzer 20 zum Umsetzen der Codierung für die Leuchtmittel L4 - L6 angeordnet. Die Umsetzer 10, 20 stehen jeweils mit der Codierungseinheit 40 in Signalverbindung. Durch die Umsetzer 10, 20 kann das von der Codierungseinheit 40 gesendete pulsweitenmodulierte Signal in entsprechende Lichtsignale an den Leuchtmitteln L1 - L6 umgesetzt werden.

Mit Bezug auf Fig. 1 wird anschließend ein Verfahren zum Schützen eines Nutzers des Lichtsystems 100 vor Blendlicht erläutert. Hierzu wird in einem ersten Schritt S1 das Licht M1 - M6 der einzelnen Leuchtmittel L1 - L6 zunächst mit einer jeweiligen Codierung durch die Codierungseinheit 40 versehen. Die Codierung wird mittels Pulsweitenmodulation durchgeführt und weist einen vordefinierten Tastgrad mit ca. 97,5 % und eine Frequenz mit einer Rate von ca. 1.000 Hz auf. Der Frequenzbandabstand der jeweiligen Frequenzen beträgt ca. 30 Hz. Alternativ dazu wäre auch eine vordefinierte Bit-Codierung möglich. Die Codierungseinheit 40 weist für die Pulsweitenmodulation ein Modulationsmodul zum Umwandeln von Leistung in das gewünschte gepulste Signal auf.

In einem zweiten Schritt S2 wird durch den Lichtsensor 30 Blendlicht M2X erfasst. D.h., der Lichtsensor 30 erfasst reflektiertes Licht von Leuchtmittel L2, das einen am Lichtsensor 30 zu hellen Wert aufweist, also einen vordefinierten Sollwert überschreitet. Überlagerte Frequenzen können hierbei durch eine Fourier Transformation von Umgebungslicht sowie voneinander getrennt werden.

In einem dritten Schritt S3 wird nun das erfasste Blendlicht M2X zu dem zugehörigen Leuchtmittel L2 anhand der Codierung des Lichtes für das entsprechende Leuchtmittel L2 zugeordnet.

Anschließend wird in einem vierten Schritt S4 das Leuchtmittel L2 zum Schützen des Nutzers vordem erfassten Blendlicht M2X anhand des erfassten Blendlichts M2X eingestellt. Die Schritte S2 bis S4 können so lange bzw. oft wiederholt werden, bis keine Blendung mehr vorliegt.

In Fig. 2 ist eine Arbeitsmaschine 200 in Form eines Traktors mit einem Lichtsystem 100 dargestellt. Das Lichtsystem 100 entspricht zumindest im Wesentlichen dem vorstehend mit Bezug auf Fig. 1 beschriebenen Lichtsystem 100. Die Arbeitsmaschine 200 weist eine Kabine 210 für einen Nutzer des Lichtsystems 100 auf. Das in Fig. 2 dargestellte Lichtsystem 100 weist zwei Lichtsensoren 30 auf, wobei einer der Lichtsensoren 30 in der Kabine 210 im Sichtbereich und auf Augenhöhe eines sich in der Kabine 210 befindenden Nutzers (nicht dargestellt) angeordnet ist und der andere Lichtsensor am Leuchtmodul 70 angeordnet ist.

Wie in Fig. 2 dargestellt, weist das Lichtsystem 100 ferner ein Eye-Tracking-System 80 zum Erfassen von Blickinformationen des Nutzers des Lichtsystems 100 auf, wobei die Kontrolleinheit 50 ausgestaltet ist, das zugehörige Leuchtmittel L2 abhängig von erfassten Blickinformationen einzustellen.

Die Erfindung lässt neben den dargestellten Ausführungsformen weitere Gestaltungsgrundsätze zu. D.h., die Erfindung soll nicht auf die in den Figuren dargestellten Ausführungsformen beschränkt betrachtet werden.

### Bezugszeichenliste

- 10: Umsetzer
- 20: Umsetzer
- 30: Lichtsensor
- 40: Codierungseinheit
- 50: Kontrolleinheit
- 60: Leuchtmodul
- 70: Leuchtmodul
- 80: Eye-Tracking-System
- 100: Lichtsystem
- L1: Leuchtmittel
- L2: Leuchtmittel
- L3: Leuchtmittel
- L4: Leuchtmittel
- L5: Leuchtmittel
- L6: Leuchtmittel
- M1: Licht
- M2: Licht
- M3: Licht
- M4: Licht
- M5: Licht
- M6: Licht

## Patentansprüche

1. Verfahren zum Schützen eines Nutzers eines Lichtsystems (100), das mehr als zwei Leuchtmittel (L1 -L6), wenigstens einen Lichtsensor (30) sowie wenigstens eine Codierungseinheit (40) aufweist, vor Blendlicht von wenigstens einem der Leuchtmittel (L1 - L6), aufweisend die Schritte:
- Erstellen einer jeweiligen, unterschiedlichen Codierung für Licht (M1 - M6) der einzelnen Leuchtmittel (L1 - L6) durch die wenigstens eine Codierungseinheit (40),
- Erfassen von Blendlicht (M2X) von wenigstens einem der Leuchtmittel (L1 - L6) durch den wenigstens einen Lichtsensor (30), **gekennzeichnet durch** die Schritte:
- Zuordnen des erfassten Blendlichts (M2X) zu dem wenigstens einen zugehörigen Leuchtmittel (L2) anhand der unterschiedlichen Codierung des Lichtes für das entsprechende Leuchtmittel (L2), und
- Einstellen des wenigstens einen zugehörigen Leuchtmittels (L2) zum Schützen des Nutzers vor dem erfassten Blendlicht (M2X).

2. Verfahren nach Anspruch 1,
**dadurch gekennzeichnet, dass**
die Codierung mittels Pulsweitenmodulation durchgeführt wird.

3. Verfahren nach Anspruch 2,
**dadurch gekennzeichnet, dass**
die Codierung einen vordefinierten Tastgrad aufweist.

4. Verfahren nach Anspruch 3,
**dadurch gekennzeichnet, dass**
der Tastgrad zwischen 95% und 99%, insbesondere zwischen 97% und 98% liegt.

5. Verfahren nach einem der Ansprüche 2 bis 4,
**dadurch gekennzeichnet, dass**
die Codierung eine vordefinierte Frequenz aufweist.

6. Verfahren nach Anspruch 5,
**dadurch gekennzeichnet, dass**
die jeweiligen Codierungen unterschiedliche Frequenzen aufweisen, wobei sich die Frequenzen um wenigstens 5 Hz, insbesondere in einem Bereich von 20 Hz bis 30 Hz, voneinander unterscheiden.

7. Verfahren nach einem der Ansprüche 5 bis 6,
**dadurch gekennzeichnet, dass**
die Frequenz der Codierung eine Rate zwischen 100 Hz und 10.000 Hz, insbesondere zwischen 1.000 Hz und 3.000 Hz aufweist.

8. Verfahren nach einem der voranstehenden Ansprüche,
**dadurch gekennzeichnet, dass**
die Codierung eine vordefinierte Bit-Codierung aufweist.

9. Verfahren nach einem der voranstehenden Ansprüche,
**dadurch gekennzeichnet, dass**
das wenigstens eine zugehörige Leuchtmittel (L2) unter Verwendung eines Eye-Tracking-Systems (80) zum Erfassen von Blickinformationen eines Nutzers des Lichtsystems (100) sowie unter Berücksichtigung der erfassten Blickinformationen eingestellt wird.

10. Lichtsystem (100), aufweisend mehr als zwei Leuchtmittel (L1 - L6), wenigstens einen Lichtsensor (30) zum Erfassen der Lichter (M1 - M6) der Leuchtmittel (L1 - L6), wenigstens eine Codierungseinheit (40) zum unterschiedlichen Codieren der Lichter (M1 - M6) der Leuchtmittel (L1 - L6), und eine Kontrolleinheit (50) zum Steuern der Codierungseinheit (40), wobei die Kontrolleinheit (50) mit dem wenigstens einen Lichtsensor (30) sowie der wenigstens einen Codierungseinheit (40) in Signalverbindung steht **dadurch gekennzeichnet, dass** die Kontrolleinheit (50) zum Durchführen eines Verfahrens nach einem der voranstehenden Ansprüche konfiguriert und ausgestaltet ist.

11. Lichtsystem (100) nach Anspruch 10,
**dadurch gekennzeichnet, dass**
die Leuchtmittel jeweils eine LED aufweisen oder jeweils als LED ausgestaltet sind.

12. Lichtsystem (100) nach einem der Ansprüche 10 bis 11,
**dadurch gekennzeichnet, dass**
der wenigstens eine Lichtsensor (30) an oder in unmittelbarer Nähe von wenigstens einem der Leuchtmittel (L1 - L6) angeordnet ist.

13. Lichtsystem (100) nach einem der Ansprüche 10 bis 12,
**dadurch gekennzeichnet, dass**
ein Eye-Tracking-System (80) zum Erfassen von Blickinformationen eines Nutzers des Lichtsystems (100) angeordnet ist, wobei die Kontrolleinheit (50) ausgestaltet ist, das wenigstens eine zugehörige Leuchtmittel (L2) abhängig von den erfassten Blickinformationen einzustellen.

14. Arbeitsmaschine (200) mit einem Lichtsystem (100) nach einem der Ansprüche 10 bis 13, aufweisend eine Kabine (210) für einen Nutzer des Lichtsystems (100).

15. Arbeitsmaschine nach Anspruch 14,
**dadurch gekennzeichnet, dass**
der wenigstens eine Lichtsensor (30) in der Kabine (210), insbesondere im Sichtbereich und auf Augenhöhe eines sich in der Kabine (210) befindenden und arbeitenden Nutzers, angeordnet ist.

## Claims

1. Method of protecting a user of a light system (100) comprising more than two illuminants (L1-L6), at least one light sensor (30), and at least one coding unit (40) from glare from at least one of the illuminants (L1-L6), comprising the steps of:
- creating a respective, different coding for light (M1 - M6) of the individual illuminants (L1 - L6) by the at least one coding unit (40),
- detecting glare (M2X) from at least one of the illuminants (L1 - L6) by the at least one light sensor (30), **characterized by** the steps:
- assigning the detected glare (M2X) to the at least one associated illuminant (L2) on the basis of the different coding of the light for the corresponding illuminant (L2), and
- adjusting the at least one associated illuminant (L2) to protect the user from the detected glare (M2X).

2. Method according to claim 1,
**characterized in that**
the coding is performed by means of pulse width modulation.

3. Method according to claim 2,
**characterized in that**
the coding comprises a predefined pulse duty factor.

4. Method according to claim 3,
**characterized in that**
the pulse duty factor is between 95% and 99%, in particular between 97% and 98%.

5. Method according to any one of claims 2 to 4,
**characterized in that**
the coding comprises a predefined frequency.

6. Method according to claim 5,
**characterized in that**
the respective coding comprises different frequencies, wherein the frequencies differ from one another by at least 5 Hz, in particular in a range from 20 Hz to 30 Hz.

7. Method according to any one of claims 5 to 6,
**characterized in that**
the frequency of the coding comprises a rate between 100 Hz and 10,000 Hz, in particular between 1,000 Hz and 3,000 Hz.

8. Method according to any one of the preceding claims,
**characterized in that**
the coding comprises a predefined bit coding.

9. Method according to any one of the preceding claims,
**characterized in that**
the at least one associated illuminant (L2) is adjusted using an eye tracking system (80) for detecting gaze information of a user of the light system (100) and taking into account the detected gaze information.

10. Light system (100), comprising more than two illuminants (L1 - L6), at least one light sensor (30) for detecting the lights (M1 - M6) of the illuminants (L1 - L6), at least one coding unit (40) for differentially coding the lights (M1 - M6) of the illuminants (L1 - L6), and a control unit (50) for controlling the coding unit (40), wherein the control unit (50) is in signal connection with the at least one light sensor (30) and the at least one coding unit (40), **characterized in that** the control unit (50) is configured and designed for carrying out a method according to one of the preceding claims.

11. Light system (100) according to claim 10,
**characterized in that**
the illuminants each comprise an LED or are each designed as an LED.

12. Light system (100) according to any one of claims 10 to 11,
**characterized in that**
the at least one light sensor (30) is arranged on or in the immediate vicinity of at least one of the illuminants (L1 - L6).

13. Light system (100) according to any one of claims 10 to 12,
**characterized in that**
an eye tracking system (80) is arranged for detecting gaze information of a user of the light system (100), wherein the control unit (50) is configured to adjust the at least one associated illuminant (L2) depending on the detected gaze information.

14. Working machine (200) comprising a light system (100) according to any one of claims 10 to 13, comprising a cabin (210) for a user of the light system (100).

15. Working machine according to claim 14,
**characterized in that**
the at least one light sensor (30) is arranged in the cabin (210), in particular in the field of view and at eye level of a user who is located and working in the cabin (210).

## Revendications

1. Procédé de protection d'un utilisateur d'un système d'éclairage (100) ayant plus de deux moyens d'éclairage (L1-L6), au moins un capteur de lumière (30), et au moins une unité de codage (40) contre l'éblouissement provenant d'au moins un des moyens d'éclairage (L1-L6), comprenant les étapes comprenant :
- créer un codage différent respectif pour la lumière (M1 - M6) des des moyens d'éclairage individuels (L1 - L6) par l'au moins une unité de codage (40),
- détecter l'éblouissement (M2X) à partir d'au moins un desdits moyens d'éclairage (L1 - L6) par ledit au moins un capteur de lumière (30), **caractérisé par** les étapes comprenant :
- associer l'éblouissement détecté (M2X) à l'au moins un moyen d'éclairage associé (L2) sur la base du codage différent de la lumière pour le moyen d'éclairage correspondant (L2), et
- régler l'au moins un moyen d'éclairage associé (L2) pour protéger l'utilisateur de l'éblouissement détecté (M2X).

2. Procédé de la revendication 1,
**caractérisé en ce que**
le codage est effectué au moyen d'une modulation de largeur d'impulsion.

3. Procédé de la revendication 2,
**caractérisé en ce que**
le codage comprend un facteur de durée prédéfini.

4. Procédé de la revendication 3,
**caractérisé en ce que**
le facteur de durée est compris entre 95 % et 99 %, en particulier entre 97 % et 98 %.

5. Procédé selon l'une des revendications 2 à 4,
**caractérisé en ce que**
le codage comprend une fréquence prédéfinie.

6. Procédé de la revendication 5,
**caractérisé en ce que**
les codages respectifs comprennent des fréquences différentes, les fréquences différant les unes des autres d'au moins 5 Hz, en particulier dans une plage de 20 Hz à 30 Hz.

7. Procédé selon l'une des revendications 5 à 6,
**caractérisé en ce que**
la fréquence du codage comprend un taux compris entre 100 Hz et 10 000 Hz, en particulier entre 1 000 Hz et 3 000 Hz.

8. Procédé selon l'une des revendications précédentes,
**caractérisé en ce que**
le codage comprend un codage de bits prédéfini.

9. Procédé selon l'une des revendications précédentes,
**caractérisé en ce que**
l'au moins un moyen d'éclairage associé (L2) est réglé en utilisant un système de suivi des yeux (80) pour détecter des informations de regard d'un utilisateur du système d'éclairage (100) et en prenant en compte les informations de regard détectées.

10. Système d'éclairage (100), comprenant plus de deux moyens d'éclairage (L1 - L6), au moins un capteur de lumière (30) pour détecter les lumières (M1 - M6) des moyens d'éclairage (L1 - L6), au moins une unité de codage (40) pour le codage différentiel des lumières (M1 - M6) des moyens d'éclairage (L1 - L6), et une unité de contrôle (50) pour commander l'unité de codage (40), l'unité de contrôle (50) étant en liaison de signalisation avec l'au moins un capteur de lumière (30) et la au moins une unité de codage (40), **caractérisé en ce que** l'unité de contrôle (50) est configurée et conçue pour la mise en oeuvre d'un procédé selon l'une des revendications précédentes.

11. Système d'éclairage (100) selon la revendication 10,
**caractérisé en ce que**
les moyens d'éclairage comprennent chacun une LED ou sont conçus comme une LED.

12. Système d'éclairage (100) selon l'une des revendications 10 à 11,
**caractérisé en ce que**
l'au moins un capteur de lumière (30) est disposé sur ou à proximité immédiate d'au moins un des moyens d'éclairage (L1 - L6).

13. Système d'éclairage (100) selon l'une des revendications 10 à 12,
**caractérisé en ce que**
un système de suivi des yeux (80) est disposé pour détecter des informations de regard d'un utilisateur du système d'éclairage (100), l'unité de contrôle (50) étant conçue pour régler l'au moins un moyen d'éclairage associé (L2) en fonction des informations de regard détectées.

14. Machine de travail (200) comprenant un système d'éclairage (100) selon l'une des revendications 10 à 13, comprenant une cabine (210) pour un utilisateur du système d'éclairage (100).

15. Machine de travail selon la revendication 14,
**caractérisé en ce que**
l'au moins un capteur de lumière (30) est disposé dans la cabine (210), en particulier dans le champ de vision et au niveau des yeux d'un utilisateur qui se trouve et travaille dans la cabine (210).
